**Europäisches Patentamt**

**European Patent Office**

**Office européen des brevets**

(19)

(11) Numéro de publication : **0 309 325 B1**

(12) **FASCICULE DE BREVET EUROPEEN**

(45) Date de publication du fascicule du brevet :
13.11.91 Bulletin 91/46

(51) Int. Cl.⁵ : **B29C 45/14, B29C 67/22**

(21) Numéro de dépôt : **88402346.6**

(22) Date de dépôt : **16.09.88**

(54) **Procédé de moulage d'un cadre sur une garniture de siège en vue de la réalisation d'un élément de siège.**

(30) Priorité : 24.09.87 FR 8713199

(43) Date de publication de la demande :
29.03.89 Bulletin 89/13

(45) Mention de la délivrance du brevet :
13.11.91 Bulletin 91/46

(84) Etats contractants désignés :
AT BE CH DE ES GB GR IT LI LU NL SE

(56) Documents cités :
EP-A- 0 100 276
DE-A- 2 117 523
DE-A- 3 435 365
FR-A- 2 026 339
GB-A- 1 222 908

(73) Titulaire : **ETABLISSEMENTS M. DURET &
FILS Société Anonyme dite:
59, rue Lemarrois
F-27800 Brionne (FR)**

(72) Inventeur : **Danton, Jean-Louis
8, rue Gambetta
F-92100 Boulogne (FR)**

(74) Mandataire : **Jolly, Jean-Pierre et al
Cabinet Jolly 54, rue de Clichy
F-75009 Paris (FR)**

## Description

La présente invention concerne un procédé de moulage d'un cadre sur une garniture de siège en vue de la réalisation d'un élément de siège selon le préambule de la revendication 1.

Ce procédé est destiné plus particulièrement à être appliqué aux garnitures de siège qui font l'objet du brevet français N° 2447167, appartenant à la Demanderesse.

On rappelle que ces garnitures sont constituées essentiellement de trois éléments :

1) Une couche de couverture en matière plastique compacte, relativement épaisse, qui, en raison de son épaisseur et de sa compacité, constitue un premier obstacle à la lacération. Cette couche de couverture, qui n'est soumise à aucun effort quelconque en tension, présente une faible élasticité dans son plan mais une bonne flexibilité.

2) Un réseau, formé d'une nappe continue de ressorts métalliques, en spirale (hélicoïdaux),dont les axes sont parallèles à la couche de couverture en matière plastique compacte, et dont les spires sont entremêlées les unes avec les autres, de manière à obtenir, vue en plan, une structure en forme de damier, à mailles très peu extensibles, permettant de stopper la pénétration et la progression d'un objet tranchant (les ressorts ne pouvant pas s'écarter pour laisser le passage dudit objet), les spires desdits ressorts venant, d'un côté, sensiblement affleurer contre la face inférieure de la couche de couverture.

3) Une couche intermédiaire de liaison entre la couche de couverture et la nappe de ressorts, cette couche étant réalisée en une mousse de matière plastique d'épaisseur inférieure au diamètre des spires des ressorts de ladite nappe et adhérant, d'un côté sur la face inférieure de la couche de couverture en matière plastique compacte et venant en partie enrober les spires de la nappe de ressorts (sur une fraction de l'épaisseur de la nappe de ressorts).

Cette garniture est destinée à équiper des sièges de transports en commun et autres lieux publics et elle vise à limiter les actes de vandalisme en s'opposant aux lacérations des sièges.

Dans la mesure où les ressorts dont elle est équipée ne sont que partiellement noyés dans la couche intermédiaire de liaison, la fixation d'un cadre rigide à la périphérie d'une portion d'une telle garniture, pour réaliser un élément de siège, soulève divers problèmes. En particulier, si l'on désire mouler une matière plastique à la périphérie de la garniture, pour former un cadre, les opérations de moulage sont compliquées par la présence, en surface de la couche intermédiaire, des spires de ces ressorts.

Pour remédier à cet inconvénient, la Demanderesse a proposé, dans le brevet européen N° 0100276 ayant servi de base pour le préambule de la revendication 1, un procédé original pour réaliser un tel élément de siège. Ce procédé comprend les opérations suivantes :

— La découpe de la garniture,

— Le dépôt, à une légère distance de la bordure périphérique, du côté où émerge la nappe de ressorts, d'un cordon en matière plastique possédant des propriétés d'élasticité, ce cordon venant adhérer sur la couche intermédiaire en mousse de matière plastique, et venant enrober, en la dépassant, la partie de la nappe de ressorts sortant de ladite couche intermédiaire, ce cordon étant destiné à servir d'élément d'étanchéité lors du moulage du cadre rigide,

— La mise en place de la bordure périphérique de la garniture dans la cavité d'un moule périphérique, l'étanchéité entre la garniture et le moule étant assurée, d'un côté, par le contact de la paroi du moule avec la face extérieure de la garniture et, de l'autre côté, par le contact de la paroi du moule sur le cordon d'étanchéité, et

— Le coulage ou l'injection d'une matière plastique convenablement choisie à l'intérieur du moule, pour réaliser un cadre rigide à la périphérie de la garniture.

Ce procédé se révèle d'une très grande efficacité, mais il est compliqué par la nécessité de noyer les spires des ressorts qui émergent de la couche intermédiaire dans un cordon de matière plastique qui sert d'élément d'étanchéité lors du moulage du cadre rigide.

La présente invention vise à simplifier ce procédé en supprimant la phase de réalisation d'un cordon d'étancheité avec l'opération de moulage du cadre.

En effet, la Demanderesse a établi qu'en utilisant des conditions judicieuse d'injection d'une matière thermoplastique, il est possible de réaliser un cadre moulé à la périphérie d'un élément de garniture du type rappelé ci-dessus, sans avoir à réaliser préalablement un cordon de matière plastique assurant l'étanchéité au niveau du moule.

La présente invention a, par conséquent, pour objet un procédé pour la réalisation d'un élément de siège ou analogue à partir d'une portion de la forme désirée d'une garniture comprenant au moins, une couche de couverture en matière plastique relativement compacte, un réseau formé par une nappe continue de ressorts métalliques, en spirale, dont les axes sont parallèles à la couche de couverture et dont les spires entremêlées viennent, d'un côté, sensiblement affleurer contre la face inférieure de la couverture, et une couche intermédiaire de liaison entre la couche de couverture et la nappe de ressorts, cette couche étant réalisée en une mousse de matière plastique adhérant d'un côté à la face inférieure de la couche de couverture et venant, en partie, enrober les spires de la nappe de ressorts, ce procédé étant caractérisé en ce que l'on engage la bordure périphérique de ladite portion de garniture entre les mâchoires d'un moule à injecter qui présente une cavité dans laquelle pénètre ladite bordure, sans interposition entre les spires des ressorts émergeant de la couche intermédiaire et la mâchoire contiguë du moule d'aucun élément d'étanchéité, en ce que l'on referme le moule de manière à pincer la bordure périphérique et à comprimer les spires émergeant de la couche intermédiaire entre cette couche et la mâchoire contiguë de moule, en ce que l'on injecte à basse pression dans ladite cavité une matière thermoplastique additionnée d'un agent d'expansion, et en ce que l'on y laisse durcir cette matière thermoplastique.

La pression d'injection de la matière thermoplastique expansible dans le moule variera suivant la nature de cette matière entre 80 et 250 · 10⁵ Pascals (soit entre 80 et 250 bars). Toutes les matières thermoplastiques expansibles peuvent être utilisées dans le cadre de la présente invention. On mentionnera par exemple les polycarbonates, les polyarylamides et les polypropylènes, cette liste n'étant naturellement pas limitative.

En pinçant le bord de la garniture à l'aide de moule à injection, on comprime les ressorts entre la couche intermédiaire en mousse de matière plastique et les mâchoires du moule, en assurant ainsi une étanchéité primaire au niveau du moule. La couche intermédiaire étant souple et compressible, il est cependant nécessaire, d'une part, d'effectuer l'injection de matière thermoplastique sous basse pression et, d'autre part, de compenser par l'expansion de cette matière la compression subie par la mousse de la couche intermédiaire.

Les températures et les cycles d'injection, sont ceux des matières thermoplastiques additionnées d'un agent d'expansion approprié que l'on utilise.

Le Tableau ci-après donne à titre d'exemple certaines de ces caractéristiques.

TABLEAU

| Résine thermoplastique | Polycarbonate | Polyarylamide | Polypropylène |
|---|---|---|---|
| Température d'injection | 270 à 300°C | 250° à 270°C | 210° à 240°C |
| Pression d'injection dans le moule (en 10⁵ Pascals) | 250 | 200 | 80 |
| Durée d'injection | 4 à 5 secondes | 3 à 4 secondes | 2 à 3 secondes |
| Température du moule | 50°C | 40°C | 30°C |
| Temps de refroidissement | 1 minute 30 secondes | 1 minute 30 secondes | 2 minutes |

Comme agent d'expansion, on peut utiliser indifféremment, pour les matières plastiques mentionnées ci-dessus, les produits commercialisés sous les appelletions EXPANDEX, GENITRON et EXPANSOR (marques déposées).

Avantageusement, comme décrit plus en détail dans le brevet européen N° 0100276, il est possible, au cours de la phase de mise en place du moule et de moulage, d'imprimer à la garniture une contrainte en vue de lui conférer une forme galbée, qu'elle conserve, après solidification de la matière plastique formant le cadre.

Les dessins schématiques annexés illustrent la mise en oeuvre de l'invention. Sur ces dessins :

La figure 1 est une coupe montrant le pincement de la bordure périphérique de la garniture dans un moule à injection ;

La figure 2 est une coupe de l'élément de siège obtenu après moulage du cadre.

Comme représenté sur les dessins, l'élément de garniture, découpé à la forme et aux dimensions désirées, comprend une couche de couverture 1 en matière plastique compacte telle que des élastomères de silicone, du polyéthylène, et du polychlorure de vinyle compact, par exemple de densité de l'ordre de 1,18 à 1,30, et de dureté Shore de 40 à 98, cette couche de couverture 1 étant relativement épaisse, par exemple de l'ordre de 2 mm.

La face inférieur de cette couche de couverture 1 se trouve solidariée, au moyen d'une couche intermédiaire 3 en mousse de matière plastique à un réseau formé par une nappe continue de ressorts métalliques 5 en spirale, à axes parallèles entre eux et à la couche de couverture 1.

Ces ressorts 5 peuvent être réalisés par exemple à l'aide de fils d'acier de diamètre de l'ordre de 5 à 15/10ème de mm. Le diamètre des spires peut alors être compris entre 5 et 20 mm.

La couche intermédiaire 3 peut être réalisée en mousse de matière plastique (polychlorure de vinyle, silicones, polyéthylène), de densité pouvant jar exemple varier de 1 à 1,25.

L'épaisseur de cette couche intermédiaire 3 est égale à 1 à 1 du diamètre des spires des ressorts 5, de sorte que les spires ne se trouvent qu'en partie enrobées dans la mousse de matière plastique.

La partie de ces spires qui émerge de la couche intermédiaire 3 complique naturellement la réalisation d'un cadre, par moulage d'une matière plastique, à la périphérie de l'élément de garniture, en vue de l'obtention d'un élément de siège, car les ressorts 5 s'opposent à l'obturation avec une étanchéité satisfaisante des moules utilisés.

Pour y parvenir, conformément à l'invention, on engage la bordure périphérique 7 de l'élément de garniture dans la cavité 9 d'un moule à injection 11, cette cavité 9 ayant une section correspondant à celle du cadre 13 que l'on désire réaliser. On pince la bordure 7 de la garniture dans les mâchoires du moule 11, de manière à comprimer les spires contiguës des ressorts 5 contre la couche intermédiaires 3 et à assurer une semi-étanchéité au niveau des mâchoires.

Simultanément, on galbe la garniture en la maintenant appliquée par sa couverture 1 contre une matrice 15 de la forme désirée, dans laquelle des conduits 17, reliés à une pompe à vide (non représentée), permettent d'exercer une aspiration sur la garniture.

Dans cette position, on injecte sous basse pression dans la cavité 9 du moule une résine thermoplastique additionnée d'un agent d'expansion, de manière que la déformation de la couche intermédiaire résultant de la pression exercée soit limitée et compensée par l'expansion de la matière injectée, sans affecter l'étanchéité du moule.

La matière plastique vient ainsi enrober la bordure périphérique 7 de l'élément de garniture, y compris la partie débordant de la nappe de ressorts, ce qui assure un excellent ancrage du cadre 13 ainsi réalisé.

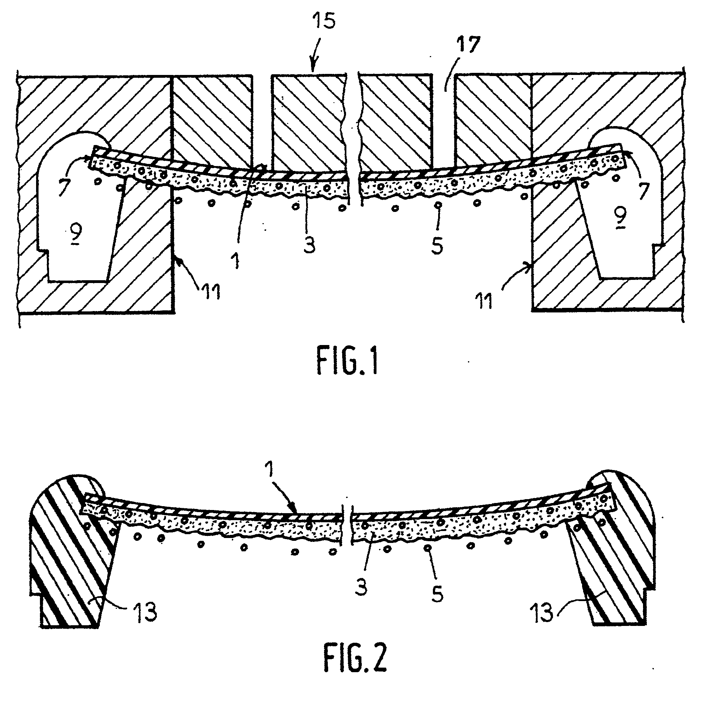

Après solidification de la matière plastique injectée et démoulage du cadre 13, on obtient l'élément de siège représenté sur la figure 2, dans lequel la garniture conserve la forme précontrainte que lui a imprimée la matrice 20.

Le procédé conforme à l'invention est donc beaucoup plus facile à mettre en oeuvre que celui de la technique antérieure décrite dans le brevet européen n° 0100276.

## Revendications

1. Procédé pour la réalisation d'un élément de siège ou analogue à partir d'une portion de la forme désirée d'une garniture (1) comprenant au moins, une couche de couverture en matière plastique relativement compacte, un réseau formé par une nappe continue de ressorts métalliques (5), en spirale, dont les axes sont parallèles à la couche de couverture (1) et dont les spires entremêlées viennent, d'un côté, sensiblement affleurer contre la face inférieure de la couverture (1), et une couche intermédiaire de liaison (3) entre la couche de couverture (1) et la nappe de ressorts (5), cette couche (3) étant réalisée en une mousse de matière plastique adhérant d'un côté à la face inférieure de la couche de couverture (1) et venant, en partie, enrober les spires de la nappe de ressorts (5), ce procédé étant caractérisé en ce que l'on engage la bordure périphérique (7) de ladite portion de garniture entre les mâchoires d'un moule (11) à injecter qui présente une cavité (9) dans laquelle pénètre ladite bordure (7), sans interposition entre les spires des ressorts (5) émergeant de la couche intermédiaire (3) et la mâchoire contiguë du moule d'aucun élément d'étanchéité, en ce que l'on referme le moule de manière à pincer la bordure périphérique (7) et à comprimer les spires émergeant de la couche intermédiaire (3) entre cette couche et la mâchoire contiguë de moule, en ce que l'on injecte à basse pression dans ladite cavité une matière thermoplastique additionnée d'un agent d'expansion, et en ce que l'on y laisse durcir cette matière thermoplastique.

2. Procédé selon la revendication 1, caractérisé en ce que la pression d'injection de la matière thermoplastique expansible est comprise entre 80 et 250 · $10^5$ Pascals.

3. Procédé selon l'une des revendications 1 ou 2, caractérisé en ce que ladite matière thermoplastique est choisie dans le groupe comprenant les polycarbonates, les polyarylamides et les polypropylènes.

4. Procédé selon l'une des revendications 1 à 3, caractérisé en ce que, de façon connue en soi, pendant la mise en place du moule et pendant la phase de moulage, on imprime à la garniture une contrainte, en vue de lui conférer une forme galbée.

## Patentansprüche

1. Verfahren zur Herstellung eines Sitzelementes od.dgl. ausgehend von einem Teil gewünschter Form einer Polsterung (1), welche wenigstens eine Deckschicht aus relativ kompaktem Kunststoff, eine Matte, welche von einer kontinuierlichen Schicht von metallischen Schraubenfedern (5) gebildet wird, deren Achsen parallel zur deckschicht (1) liegen und deren ineinander eingreifende Windungen an einer Seite im wesentlichen an der Innenfläche der Deckschicht (1) anliegen, und eine zwischenliegende Verbindungsschicht (3) zwischen der Deckschicht (1) und der Federnmatte (5) umfaßt, welche Schicht (3) aus einem Kunststoffschaum gebildet wird, welcher an einer Seite an der Innenfläche der Deckschicht (1) anhaftet und teilweise die Windungen der Federnmatte (5) umhüllt, dadurch gekennzeichnet, daß der Umfangsrand (7) des Teiles der Polsterung zwischen den Backen einer Einspritzform (11) ergriffen wird, wobei die Form einen Hohlraum (9) aufweist, in welchen der Rand (7) ohne Zwischenschaltung eines Dichtelementes zwischen den aus der Zwischenschicht (3) vorragenden windungen der Federn (5) und der anliegenden Backe der Form hineinragt, daß die Form geschlossen wird, so daß der Umfangsrand (7) eingeklemmt wird und die aus der Zwischenschicht (3) vorragenden Windungen zwischen der Schicht und der anliegenden Backe der Form komprimiert werden, daß in den Hohlraum ein thermoplastisches Material, welchem ein Schäumungszusatz zugegeben wird, unter geringem Druck eingespritzt wird und daß man das thermoplastische Material ausharten läßt.

2. Verfahren nach Anspruch 1, dadurch gekennzeichnet, daß der Einspritzdruck des expandierbaren thermoplastischen Materials zwischen 80 und 250 × 10$^5$ Pa liegt.

3. Verfahren nach einem der Ansprüche 1 oder 2, dadurch gekennzeichnet, daß das thermoplastische Material aus der Gruppe umfassend Polycarbonote. Polyarylamide und Polypropylene gewählt wird.

4. Verfahren nach einem der Ansprüche 1 bis 3, dadurch gekennzeichnet, daß in an sich bekannter weise während der Positionierung in der Form und während des Gießvorganges auf die Polsterung eine Beanspruchung ausgeübt wird, um dieser eine gewölbte bzw. gekrümmte Form zu verleihen.

## Claims

1. A process for the production of a seat element or the like from a portion of the desired shape of an upholstery means (1) comprising at least a cover layer of relatively compact plastics material, an array formed by a continuous layer of metal springs (5) in a spiral configuration, the axes of which are parallel to the cover layer (1) and the interlaced turns of which are disposed on one side substantially flush against the lower face of the cover (1), and an intermediate connecting layer (3) between the cover layer (1) and the layer of springs (5), said layer (3) being made of a plastics material foam which adheres on one side to the lower face of the cover layer (1) and which in part encases the turns of the layer of springs (5), the process being characterised in that the peripheral edge region (7) of said upholstery portion is engaged between the jaws of an injection mould (11) which has a cavity (9) into which said edge region (7) passes without the interposition between the turns of the springs (5) which project from the intermediate layer (3) and the adjoining jaw of the mould of any sealing element, that the mould is closed so as to grip the peripheral edge region (7) and compress the turns which project from the intermediate layer (3) between said layer and the adjoining jaw of the mould, that a thermoplastic material with an expansion agent added thereto is injected under low pressure into said cavity and that said thermoplastic material is hardened therein.

2. A process according to claim 1 characterised in that the expansible thermoplastic material injection pressure is between 80 and 250 · 10$^5$ Pascals.

3. A process according to one of claims 1 and 2 characterised in that said thermoplastic material is selected from the group comprising polycarbonates, polyarylamides and polypropylenes.

4. A process according to one of claims 1 to 3 characterised in that in per se known manner, during the operation of setting the mould in position and during the moulding phase, a stress is imparted to the upholstery means to impart a curved shape thereto.

**FIG.1**

**FIG.2**